# EUROPÄISCHE PATENTSCHRIFT

(11) **EP 1 193 472 B1**
(45) Veröffentlichungstag und Bekanntmachung des Hinweises auf die Patenterteilung: **05.05.2010**
(21) Anmeldenummer: 01121324.6
(22) Anmeldetag: 06.09.2001
(51) Int. Cl.: G01D 3/08, G01B 7/30

(54) **Verfahren und Vorrichtung zur Bestimmung der Absolutposition bei Weg- und Winkelgebern**
Method and apparatus for determining the absolute position of displacement and angle sensors
Procédé et appareil pour la détermination de la position absolue des capteurs de déplacements et d'angles

(30) Priorität: 02.10.2000 DE 10048911
(43) Veröffentlichungstag der Anmeldung: 03.04.2002
(73) Patentinhaber: Bourns, Inc., Riverside, California 92507 (US)
(72) Erfinder: Schödlbauer, Dieter, Dr., 81825 München (DE)
(74) Vertreter: von Bülow, Tam

(56) Entgegenhaltungen:
- WO-A-00/34746
- DE-A- 19 712 869
- DE-C- 19 849 554

## Beschreibung

Die Erfindung bezieht sich auf ein Verfahren zur Bestimmung der Absolutposition einer sich drehenden Welle bei Weg- und Winkelgebern gemäß dem Oberbegriff des Patentanspruches 1 sowie auf eine Schaltungsanordnung zur Durchführung des Verfahrens gemäß dem Oberbegriff des Patentanspruches 2.

Verfahren und Vorrichtungen dieser Art sind aus der DE 32 46 959 C3 bekannt. Die dort beschriebene Meßvorrichtung verwendet zur Bestimmung der Absolutposition zwei mechanisch gekoppelte Einzelsensoren, von denen der erste im Meßbereich ein Ausgangssignal D1 mit einer ersten Anzahl n von Perioden und der zweite im selben Meßbereich ein Ausgangssignal D2 mit einer zweiten Anzahl n-1 von Perioden erzeugt, wobei ein Differenzsignal zur Bildung eines monotonen, eindeutigen, absoluten Positionssignals erzeugt wird. Weiter wird dort ein dritter Sensor mit einer dritten Anzahl von Perioden verwendet, der eine dritte, von den beiden ersten und zweiten Periodenzahlen unterschiedliche Periodenzahl erzeugt.

Die DE 198 49 554 C1 beschreibt zwei mechanisch mit einer sich drehenden Welle gekoppelte Einzelsensoren, von denen der erste im Meßbereich ein Ausgangssignal Φ1 mit einer ersten Anzahl k₁ von Perioden und der zweite im selben Meßbereich ein Ausgangssignal Φ2 mit einer zweiten Anzahl k₂ von Perioden erzeugt, wobei sich die beiden Anzahlen von Perioden um eine Eins unterscheiden. Aus den beiden Signalen Φ1 und Φ2, für die gilt 0 ≤ Φ₁, Φ₂ ≤ 2π, wird ein Differenzsignal gebildet. Darauf wird überprüft, ob das Differenzsignal negativ ist und, ist dies der Fall, wird ein konstanter Wert (2π) zu dem Differenzsignal zur Bildung eines korrigierten Differenzsignales hinzuaddiert. Das mit der Periodenzahl k₁ multiplizierte und durch den Meßbereich 2n dividierte korrigierte Differenzsignal wird auf die nächst niedrige Ganzzahl abgerundet und anschließend wird dieser Wert mit dem Meßbereich 2n multipliziert, zur Bildung eines Periodennummernsignals. Das Ausgangs-Ausgangssignal Φ1 des einen Sensors wird zu diesem Periodennummernsignal addiert, zur Bildung eines feingenauen absoluten Ausgangssignals. Weiter wird ein Hilfssignal als Differenz zwischen dem feingenauen absoluten Ausgangssignal und dem korrigierten Differenzsignal multipliziert mit der Periodenzahl k₁ des einen Sensors gebildet und überprüft, ob dieses Hilfssignal innerhalb vorbestimmter Grenzwerte (+/-π) liegt. Für den Fall, daß das Hilfssignal außerhalb der Grenzwerte liegt, wird eine weitere Korrektur des korrigierten, feingenauen, absoluten Ausgangssignales durch Addition oder Subtraktion eines vorgegebenen Wertes (2n) durchgeführt.

Kurz zusammengefaßt wird bei diesem Stand der Technik aus der Signaldifferenz der beiden Sensoren eine Periodennummer PNr gewonnen mit dem Wertebereich 0 ≤ PNr ≤ k₁ - 1. Durch die Kombination der Periodennummer PNr mit dem periodischen Ausgangssignal eines Sensors erhält man ein im Meßbereich monotones, eindeutiges und damit absolut gültiges Meßergebnis.

Bei Ausfall eines der beiden Sensormodule ist die Funktion des Systems nicht mehr gegeben, was bei sicherheitsrelevanten Anwendungen, wie z.B. Lenkwinkelsensoren bei Kraftfahrzeugen, problematisch ist.

Die WO 00/34746 A zeigt eine Vorrichtung und ein Verfahren zur Messung der Winkellage eines drehbaren Körpers. Durch Ermittlung der Winkellagen von wenigstens zwei weiteren drehbaren, mechanisch gekoppelten Körpern, wobei die Winkellage dieser weiteren Drehkörper mittels periodischer Winkelsensoren ermittelt wird. Zur Erhöhung der Meßsicherheit ist ein weiteres Paar von drehbaren mechanischen Körpern vorgesehen, wobei bei Ausfall eines Winkelsensors eine neue Paarung zweier verbleibender Sensoren gebildet wird. Die Periodenzahl der einzelnen Drehkörper ist teilerfremd.

Aufgabe der Erfindung ist es daher, Verfahren und Vorrichtung der eingangs genannten Art dahingehend zu verbessern, daß auch bei Ausfall eines der Sensormodule noch eine ausreichend genaue Funktion erfüllt wird. Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung besteht darin, einen dritten Sensor vorzusehen, der ebenfalls mechanisch mit den beiden anderen Sensoren gekoppelt ist und im Meßbereich eine Anzahl k₃ Perioden hat, wobei k₃ = k₁ - 1/2 = k₂ + 1/2 gilt. Mit dieser Wahl für die Periodenanzahl k₃ wird erreicht, daß die Phasendifferenz zu den beiden anderen Sensoren für jede Position innerhalb des Meßbereiches betragsmäßig gleich ist. Im Falle eines Fehlers an einem der beiden ersten Sensoren wird auf das Ausgangssignal des dritten Sensors zurückgegriffen, wobei die zugehörige Periodennummer aus der Phasendifferenz zu dem verbliebenen funktionsfähigen Sensor analog zu dem in der DE 198 49 554 beschriebenen Verfahren ermittelt wird.

Mit der Erfindung bleibt das System auch bei Ausfall eines der beiden Hauptsensormodule funktionsfähig und gestattet zumindest einen Notbetrieb. Bei der Systemantwort macht es keinen Unterschied, ob der erste oder zweite Sensor ausgefallen ist. Während des Notbetriebes kann eine reduzierte Meßgenauigkeit zulässig sein. Der Notbetrieb kann erkannt werden, so daß das Sensorsystem bei passender Gelegenheit gewartet oder ausgetauscht werden kann.

Im folgenden wird die Erfindung anhand eines Ausführungsbeispieles im Zusammenhang mit der Zeichnung ausführlicher erläutert. Es zeigt:
- Fig. 1: ein Prinzipschaltbild der Vorrichtung nach der Erfindung;
- Fig. 2: ein Diagramm der Sensorausgangssignale aller drei Sensoren;
- Fig. 3: ein Diagramm eines Differenzsignales des ersten und zweiten Sensors; und
- Fig. 4: ein Diagramm eines Differenzsignales zwischen dem ersten und dem dritten Sensor.

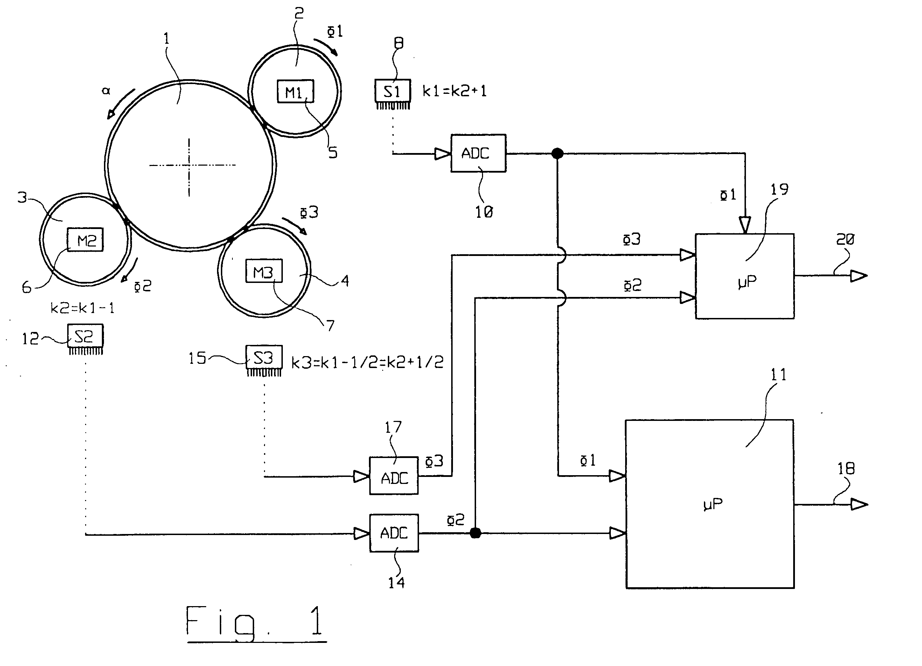

In Fig. 1 ist eine Welle 1 zu erkennen, deren Drehposition gemessen werden soll. Die Welle ist mit drei Zahnrädern 2, 3, 4 gekoppelt, die hier je einen Magneten 5, 6, 7 tragen, der mit einem zugeordneten Sensor 8, 12, 15 zusammenarbeitet. Die Sensoren 8, 12, 15 erzeugen im Meßbereich je ein lineares Ausgangssignal, das sich im Meßbereich periodisch wiederholt. Der Meßbereich bezieht sich auf die Position der Welle 1, deren Drehwinkel α gemessen werden soll. Ist die Welle 1 beispielsweise die Antriebswelle für die Lenkung eines Kraftfahrzeuges, so ist der Meßbereich von Anschlag zu Anschlag beispielsweise drei volle Umdrehungen der Welle 1. Selbstverständlich kann der Meßbereich auch auf andere beliebige Werte festgesetzt sein. Der verwendete Typ der Sensoren 8, 12 und 15 ist beliebig. Beispielsweise kann ein Sensor gemäß der DE 195 39 134 A1 oder 197 47 753 A1 verwendet werden. Selbstverständlich können die Sensoren auch Wegsensoren bzw. Linearsensoren sein, die mechanisch miteinander gekoppelt sind. Auch lassen sich als Sensoren ohne weiteres herkömmliche Potentiometer verwenden oder, wie in Fig. 1 dargestellt, sog. AMR-Sensoren (Anisotrop-Magneto-Resistiv). Die Sensoren 2, 3 und 4 liefern an ihren Ausgängen ein periodisches, im wesentlichen sägezahnförmiges Signal Φ1, Φ2 bzw. Φ3 als Funktion des Ortes (Winkel oder Weg). Mit Hilfe einer geeigneten Mechanik, wie z.B. der in Fig. 1 dargestellten Verzahnung, werden die Einzelsensoren 2, 3 und 4 mit unterschiedlicher Übersetzung angetrieben. Die Übersetzung ist so gewählt, daß im Meßbereich der Welle 1 der erste Sensor 2 eine Anzahl k₁ von Perioden durchläuft. Der zweite Sensor 3 durchläuft eine Anzahl k₂, die sich von der Anzahl k₁ um eine "1" unterscheidet, beispielsweise also k₂ = k₁ - 1. Für den ersten Sensor gilt dann: k₁ = k₂ + 1.

Der dritte Sensor 4 hat eine Anzahl Signalperioden k₃, die sich gegenüber k₁ und k₂ gerade um den Wert 1/2 unterscheidet. Es gilt dann k₃ = k₁ - 1/2 = k₂ + 1/2. Die Periodenzahl k₃ des dritten Sensors liegt also genau in der Mitte zwischen den Periodenzahlen k₁ und k₂ der beiden anderen Sensoren.

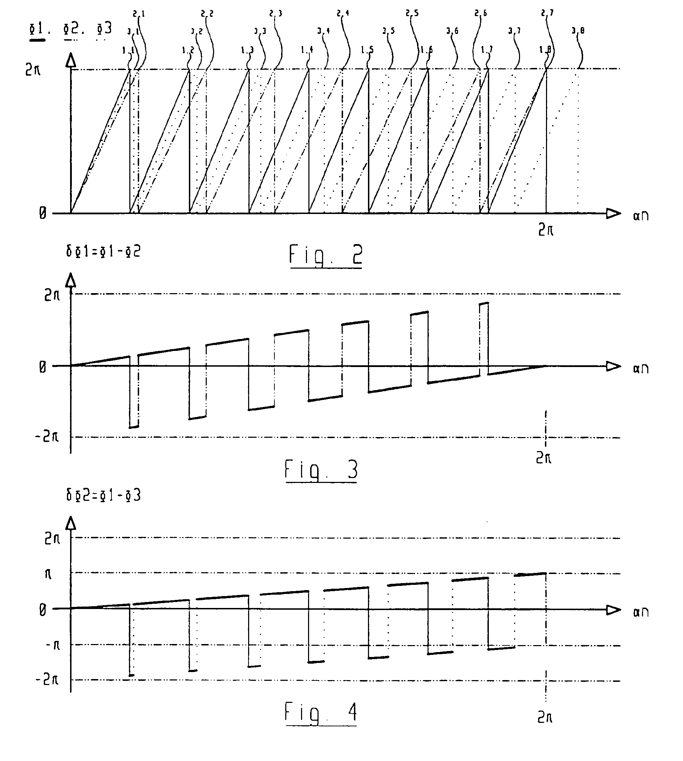

Die Ausgangssignale der drei Sensoren sind in Fig. 2 dargestellt. Der Meßbereich, der hier auf 2π normiert ist, enthält acht Perioden des ersten Sensors, sieben Perioden des zweiten Sensors und 7,5 Perioden des dritten Sensors.

Die Zahnräder 2, 3 und 4 bewegen hier Magnete 5, 6 und 7, die mit Sensor-IC's 8, 12, 15 zusammenarbeiten. Die jeweiligen Ausgangssignale werden über einen Analog-DigitalWandler 10, 14, 17 in ein digitales Signal umgewandelt und einem Mikroprozessor 11 zugeführt, der die Auswertung durchführt und an seinem Ausgang 18 ein Absolutwertsignal ausgibt.

Die Auswertung der Sensorsignale erfolgt in bekannter Weise, wie in der DE 198 49 554 C1 beschrieben.

Kurz zusammengefaßt wird in einem ersten Schritt ein Differenzsignal ΔΦ = φ1 - φ2 gebildet, das in Fig. 3 dargestellt ist. Ist diese Differenz negativ, so wird ein korrigiertes Differenzsignal durch Addition eines konstanten Wertes (hier 2π) zu dem Differenzsignal gebildet. Das mit der Periodenzahl k₁ multiplizierte und durch den Meßbereich 2π dividierte korrigierte Differenzsignal wird auf die nächst niedrige Ganzzahl abgerundet und anschließend wird dieser Wert mit dem Meßbereich 2π multipliziert, zur Bildung eines Periodennummernsignals. Das Ausgangssignal Φ1 des einen Sensors wird zu diesem Periodennummernsignal addiert, zur Bildung eines feingenauen absoluten Ausgangssignal. Weiter wird ein Hilfssignal als Differenz zwischen dem feingenauen absoluten Ausgangssignal und dem korrigierten Differenzsignal multipliziert mit der Periodenzahl k₁ des einen Sensors gebildet und überprüft, ob dieses Hilfssignal innerhalb vorbestimmter Grenzwerte (+/-π) liegt. Für den Fall, daß das Hilfssignal außerhalb der Grenzwerte liegt, wird eine weitere Korrektur des korrigierten, feingenauen, absoluten Ausgangssignales durch Addition oder Subtraktion eines vorgegebenen Wertes (2π) durchgeführt.

Bei Ausfall eines der Sensoren 2, 3 wird auf das Ausgangssignal Φ₃ des dritten Sensors 4 zurückgegriffen. Im Zusammenhang mit Fig. 4 sei angenommen, der zweite Sensor mit dem Signal Φ₂ sei ausgefallen. Es wird dann das Differenzsignal Φ₁ - Φ₃ gebildet, das in Fig. 4 dargestellt ist. Da die Periodenzahl k₃ so gewählt ist, daß sie sich im Meßbereich um den Wert 1/2 von k₁ unterscheidet, erhält man bei dem hier gewählten Ausführungsbeispiel (Fig. 2) ein Differenzsignal mit halber Steigung gegenüber dem Differenzsignal der Fig. 3. Im normierten Meßbereich (2π) erreicht das Differenzsignal daher nur den Wert π und nicht, wie bei Φ₁ - Φ₂ den Wert von 2π (vgl. Fig. 3). Ansonsten erfolgt die Auswertung in analoger Weise.

Dadurch, daß die Periodenzahl k₃ des dritten Sensors 4 gerade zwischen k₁ und k₂ liegt, ist der Absolutwert der Differenz Φ₁ - Φ₃ oder Φ₂ - Φ₃ identisch, so daß es für die Fehlersicherheit keine Rolle spielt, ob der erste oder der zweite Sensor ausgefallen ist.

Selbstverständlich ist es mit der Erfindung auch möglich, während des normalen Betriebes das Signal Φ₃ des dritten Sensors auszuwerten, um damit die Funktionsfähigkeit des dritten Sensors und damit die Funktionsfähigkeit des Notlaufbetriebes zu überwachen.

Diese Überwachung kann in der Auswerteeinheit 11 erfolgen. Es kann aber auch eine zusätzliche Auswerteeinheit 19 in Form eines Mikroprozessors vorgesehen sein, der die digitalisierten Ausgangssignale Φ₁, Φ₂ und Φ₃ zugeführt werden und die in der oben beschriebenen Weise im Fehlerfall dann das gewünschte Meßsignal am Ausgang 20 ausgibt.

Beim Ausführungsbeispiel der Fig. 1 ist der dritte Sensor für den Notlaufbetrieb vorgesehen. Generell ist es auch möglich, mehr als drei Sensoren zu verwenden, wobei jeder Sensor mit jedem anderen Sensor zusammenarbeiten kann. Dabei können auch je nach Sensorpaarung unterschiedliche Auswertealgorithmen zur Anwendung kommen.

## Patentansprüche

1. Verfahren zur Bestimmung der Absolutposition einer sich drehenden Welle (1) , die mit zwei Einzelsensoren (2,3) mechanisch gekoppelt ist , von denen der erste (2) im Meßbereich ein Ausgangssignal Φ₁ mit einer ersten Anzahl k₁ von Perioden und der zweite (3) im selben Meßbereich ein Ausgangssignal Φ₂ mit einer zweiten Anzahl k₂ von Perioden erzeugt, wobei sich die beiden Anzahlen (k₁, k₂) von Perioden um eine "1" unterscheiden und wobei ein Differenzsignal (δΦ) zur Bildung eines monotonen, eindeutigen, absoluten Positionssignales erzeugt wird,
**dadurch gekennzeichnet,**
**daß** mindestens ein dritter Sensor (4) im selben Meßbereich ein Ausgangssignal Φ₃ mit einer dritten Anzahl k₃ von Perioden erzeugt, die sich von der ersten (k₁) und zweiten (k₂) Anzahl um einen Wert von 1/2 unterscheidet und daß bei Ausfall des ersten (2) oder zweiten (3) Sensors in analoger Weise ein Differenzsignal (Φ₁ - Φ₃ oder Φ₂ - Φ₃) zwischen dem Ausgangssignal des verbliebenen funktionsfähigen Sensors und dem dritten Sensor gebildet wird, zur Bildung eines Positionssignales.

2. Vorrichtung zur Durchführung des Verfahrens nach Anspruch 1 mit einer sich drehenden Welle (1) , sowie zwei Sensoren (2, 3), die mit der Welle mechanisch gekoppelt sind, die dazu ausgelegt sind im Meßbereich ein im wesentlichen lineares sägezahnförmiges Ausgangssignal (Φ₁, Φ₂) mit je einer Anzahl von Perioden (k₁, k₂) zu erzeugen, wobei sich die Periodenzahlen der beiden Sensoren (2, 3) um eine "1" unterscheiden und mit einer Auswerteschaltung (11), die dazu ausgelegt ist aus einem Differenzsignal (Φ₁ - Φ₂) ein monotones, eindeutiges, absolutes Positionssignal an einen Ausgang (18) auszugeben, **dadurch gekennzeichnet,**
**daß** mindestens ein dritter Sensor (4) vorgesehen ist, der dazu ausgelegt ist im Meßbereich ebenfalls ein im wesentlichen lineares, sägezahnförmiges Ausgangssignal mit einer dritten Anzahl von Perioden (k₃) zu erzeugen, wobei sich die Periodenzahl (k₃) des dritten Sensors von der des ersten (2) und zweiten Sensors (3) um den Wert 1/2 unterscheidet und wobei die Auswerteschaltung (11) dazu ausgelegt ist bei Ausfall des ersten (2) oder zweiten (3) Sensors in analoger Weise ein Differenzsignal (Φ₁ - Φ₃ oder Φ₂ - Φ₃) zwischen dem Ausgangssignal des verbliebenen funktionsfähigen ersten oder zweiten Sensors und dem dritten Sensor zur Bildung eines Positionssignales auszuwerten.

3. Vorrichtung nach Anspruch 2, **dadurch gekennzeichnet,**
**daß** eine zusätzliche Auswerteeinheit (19) vorgesehen ist, der die Ausgangssignale (Φ₁, Φ₂, Φ₃) der drei Sensoren (2, 3, 4) zugeführt werden und die dazu ausgelegt ist in derselben Weise wie die erste Auswerteschaltung das Positionssignal erzeugt.

## Claims

1. Method for determining the absolute position of a rotating shaft (1) mechanically coupled with two individual sensors of which the first (2) in the measuring range generates an output signal Φ₁ with a first number of periods k₁, and the second (3) in the same measuring range generates an output signal Φ₂ with a second number of periods k₂, wherein the two numbers (k₁, k₂) of periods differ by "1" and wherein a differential signal (δΦ) is generated to generate a monotone, clear, absolute position signal, **characterized in that**
at least a third sensor (4) in the same measuring range generates an output signal Φ₃ with a third number k₃ of periods, which differ from the first (k₁) and second (k₂) number by a value of ½ and **in that** if the first or second sensor fails, in an analogous manner a differential signal (Φ₁-Φ₃ or Φ₂-Φ₃) is generated between the output signal of the remaining functional sensor to generate a position signal.

2. Device for implementing the method of claim 1 having a rotating shaft (1) and two sensors (2, 3) mechanically coupled with the shaft, designed in order to generate in the measuring range an essentially linear saw tooth-shaped output signal (Φ₁, Φ₂) each of which has a number of periods (k₁, k₂), in which the number of periods of the two sensors (2, 3) differ by "1" and with an evaluation circuit (11), which is designed to output from a differential signal (Φ₁-Φ₂) a monotone, clear, absolute position signal to an output (18), **characterized in that**
at least a third sensor (4) is provided, which is designed to generate in the measuring range also an essentially linear saw tooth-shaped output signal with a third number of periods (k₃), wherein the period number (k₃) of the third sensor differs from that of the first (2) and second (3) sensors by the value ½ and wherein the evaluation circuit (11) is designed thereto to evaluate in case of a failure of the first (2) or the second (3) sensors a differential signal (Φ₁ - Φ₃ or Φ₂ - Φ₃) between the output signal of the remaining functional first or second sensors and the third sensor in an analogous manner for generating a position signal.

3. Device according to claim 2, **characterized in that**
an additional evaluation device (19) is provided whereto the output signals (Φ₁, Φ₂, Φ₃) of the three sensors (2, 3, 4) are fed and which is designed to generate the position signal in the same manner as the first evaluation circuit.

## Revendications

1. Procédé pour déterminer la position absolue d'un arbre tournant (1) accouplé mécaniquement à deux capteurs individuels (2, 3), dont le premier (2) produit dans la plage de mesure un signal de sortie Φ₁ avec un premier nombre k₁ de périodes, et dont le deuxième (3) produit dans la même plage de mesure un signal de sortie Φ₂ avec un deuxième nombre k₂ de périodes, les deux nombres (k₁, k₂) de périodes étant différents de "1", et dans lequel un signal différentiel (δΦ) est produit pour former un signal de position absolue, univoque, monotone,
**caractérisé en ce**
**qu'**au moins un troisième capteur (4) produit dans la même plage de mesure un signal de sortie Φ₃ avec un troisième nombre k₃ de périodes différent du premier (k₁) et du deuxième (k₂) nombre d'une valeur de 1/2, et en ce qu'en cas de défaillance du premier (2) ou du deuxième (3) capteur, un signal différentiel (Φ₁ - Φ₃ ou Φ₂ - Φ₃) est formé de façon analogue entre le signal de sortie du capteur opérationnel restant et le signal de sortie du troisième capteur, pour former un signal de position.

2. Dispositif pour exécuter le procédé selon la revendication 1, avec un arbre tournant (1) ainsi que deux capteurs (2, 3) accouplés mécaniquement à l'arbre, qui sont conçus pour produire dans la plage de mesure un signal de sortie (Φ₁, Φ₂) substantiellement linéaire, en dents de scie, avec un nombre de périodes respectif (k₁, k₂), les nombres de périodes des deux capteurs (2, 3) étant différents de "1", et avec un circuit d'évaluation (11) qui est conçu pour délivrer à partir d'un signal différentiel (Φ₁ - Φ₂) un signal de position absolue, univoque, monotone, à une sortie (18),
**caractérisé en ce**
**qu'**au moins un troisième capteur (4) est prévu, qui est conçu pour produire dans la plage de mesure également un signal de sortie substantiellement linéaire, en dents de scie, avec un troisième nombre de périodes (k₃), le nombre de périodes (k₃) du troisième capteur étant différent de ceux du premier (2) et du deuxième (3) capteur de la valeur 1/2, et dans lequel le circuit d'évaluation (11) est conçu pour évaluer, en cas de défaillance du premier (2) ou du deuxième (3) capteur de façon analogue un signal différentiel (Φ₁ - Φ₃ ou Φ₂ - Φ₃) entre le signal de sortie du premier ou deuxième capteur opérationnel restant et le signal de sortie du troisième capteur pour former un signal de position.

3. Dispositif selon la revendication 2, **caractérisé en ce**
**qu'**une unité d'évaluation supplémentaire (19) est prévue, à laquelle sont amenés les signaux de sortie (Φ₁, Φ₂, Φ₃) des trois capteurs (2, 3, 4) et qui est conçue pour produire le signal de position de la même manière que le premier circuit d'évaluation.
